# EUROPÄISCHE PATENTSCHRIFT

(11) **EP 3 201 710 B1**
(45) Veröffentlichungstag und Bekanntmachung des Hinweises auf die Patenterteilung: **08.07.2020**
(21) Anmeldenummer: 15770490.9
(22) Anmeldetag: 22.09.2015
(51) Int. Cl.: B62D 15/02, B60W 30/06, B60W 50/00

(54) **EIN TRAJEKTORIEN-PLANUNGSVERFAHREN ZUR ERMITTLUNG EINES STEUERPROFILS FÜR EIN KRAFTFAHRZEUG**
A TRAJECTORY PLANNING METHOD FOR ASCERTAINING A CONTROL PROFILE FOR A MOTOR VEHICLE
PROCÉDÉ DE PLANIFICATION DE TRAJECTOIRE PERMETTANT LA DÉTERMINATION D'UN PROFIL DE COMMANDE DESTINÉ À UN VÉHICULE AUTOMOBILE

(30) Priorität: 01.10.2014 DE 102014219936
(43) Veröffentlichungstag der Anmeldung: 09.08.2017
(73) Patentinhaber: Bayerische Motoren Werke Aktiengesellschaft, 80809 München (DE)
(72) Erfinder: LAZAREVYCH, Olexiy, 81539 München (DE)
(86) Internationale Anmeldenummer: PCT/EP2015/071649
(87) Internationale Veröffentlichungsnummer: WO 2016/050553

(56) Entgegenhaltungen:
- WO-A1-2011/059914
- WO-A1-2014/009631
- US-A1- 2012 290 131
- US-A1- 2013 035 773

## Beschreibung

Die vorliegende Erfindung betrifft eine Pfadgenerierung für ein Kraftfahrzeug.

Um von einem Startort zu einem Zielort zu gelangen wird ein Pfad, auch Trajektorie genannt, benötigt, entlang derer sich ein Kraftfahrzeug bewegen kann. Aktuelle 2D Pfadgeneratoren wählen gewöhnlicher weise unter zu Hilfenahme einer Kostenfunktion aus einer, innerhalb vorgegebener Grenzbedingungen entstandenen Trajektorienschar, diejenige Trajektorie aus, welche die Kostenfunktion bestmöglich erfüllt. Dieser Ansatz weist jedoch zahlreiche Einschränkungen auf. So kann es eine oder auch mehrere bessere Trajektorien geben, welche unter den vorgegebenen Grenzbedingungen für die Pfadgeneration eine bessere Trajektorie wären, die jedoch nicht in der Trajektorienschar enthalten sind. Ferner ist es nicht möglich sicher vorherzusagen, ob das entsprechende Kraftfahrzeug überhaupt die physikalischen Möglichkeiten aufweist, diese als bestmöglichen Pfad ermittelte Trajektorie entlang zu fahren. Im Falle eines autonom fahrenden Kraftfahrzeuges, nachfolgend auch als autonomes Kraftfahrzeug bezeichnet, ist es mit den gängigen Verfahren nicht möglich sicherzustellen, dass für die Kraftfahrzeugbewegung berücksichtigt wird, ob entsprechende für die Bewegung des Kraftfahrzeuges anzusteuernde Aktuatoren, derart angesteuert werden können, dass eine akzeptable Richtungs- und/oder Beschleunigungsänderung vorgenommen werden kann.

Ferner kann es bei bisher gängigen Verfahren zu Problemen kommen, da die sich ergebenden Endzustände der Aktuatoren möglicherweise nicht geeignet sind die Bewegung in gewünschter Weise fortzusetzen. Zum Beispiel könnte es passieren, dass zwar die vorgegebene Position und Orientierung des Fahrzeugs auf einer geraden Straße am Ende der Trajektorie erreicht werden, die Lenkung aber nicht in der gewünschten (Neutral-)Stellung ist. Es wäre dann nicht ohne weiteres möglich in der folgenden Trajektorie die Spur zu halten.

Daher wäre es wünschenswert, eine Möglichkeit bereitzustellen, welche zumindest eine der zuvor genannten Einschränkungen aufhebt oder zumindest verringert.

Es ist Ziel der Erfindung eine Möglichkeit vorzuschlagen, welche zumindest einen Teil der im Stand der Technik bekannten Nachteile vermeidet oder zumindest vermindert.

Die Aufgabe wird erfindungsgemäß gelöst, mittels eines Verfahrens gemäß dem Hauptanspruch.

Der Gegenstand des Hauptanspruches betrifft dabei ein Trajektorien-Planungsverfahren zur Ermittlung eines Steuerprofils für ein Kraftfahrzeug, insbesondere für ein autonom fahrendes Kraftfahrzeug, das Verfahren aufweisend: Bereitstellen eines ersten Positionssets, wobei das erste Positionsset mindestens eine Information bezüglich einer Anfangsbedingung einer Trajektorie an einem Trajektorienanfang der Trajektorie aufweist. Bereitstellen eines zweiten Positionssets, wobei das zweite Positionsset mindestens eine Information bezüglich einer Endbedingung der Trajektorie an einem Trajektorienende der Trajektorie aufweist. Bereitstellen eines ersten Steuerungssets, wobei das erste Steuerungsset mindestens eine Information bezüglich eines Steuerungszustandes des Kraftfahrzeuges am Trajektorienanfang aufweist. Bereitstellen eines zweiten Steuerungssets, wobei das zweite Steuerungsset mindestens eine Information bezüglich eines Steuerungszustandes des Kraftfahrzeuges am Trajektorienende aufweist.

Bereitstellen einer Fahrzeugbewegungsmodellierungsfunktion, wobei die Fahrzeugbewegungsmodellierungsfunktion ein kinematisches Bewegungsmodell des Kraftfahrzeuges aufweist. Bereitstellen eines Solvers, ermitteln eines Steuerprofilinformationssets mittels Anwenden des Solvers auf die Fahrzeugbewegungsmodellierungsfunktion in Abhängigkeit des ersten Positionssets, des zweiten Positionssets, des ersten Steuerungssets und des zweiten Steuerungssets, wobei das Steuerprofilinformationsset zwei Profilinformationswerte aufweist, und wobei die Profilinformationswerte indikativ sind, für die Trajektorie. Und bestimmen eines Steuerprofils für das Kraftfahrzeug in Abhängigkeit des Steuerprofilinformationssets, wobei das Steuerprofil indikativ für die Trajektorie ist.

Ein Positionsset im Sinne der Erfindung kann dabei ein Set von Informationen sein, welche den Beginn und das Ende einer Trajektorie beschreiben. Damit können diese Informationen indikativ für die Position eines Kraftfahrzeuges zum Beginn und zum Ende der Fahrt entlang dieser Trajektorie sein.

Eine Trajektorie im Sinne der Erfindung kann dabei ein virtueller Pfad sein, welcher indikativ, für die von einem Kraftfahrzeug zurückzulegende Strecke sein kann. Insbesondere kann eine Trajektorie bestimmen, welchen Pfad ein Kraftfahrzeug nehmen soll. Dies kann insbesondere durch eine Vielzahl an Trajektorien erreicht werden, die aneinandergelegt werden können.

Ein Steuerungsset im Sinne der Erfindung kann dabei ein Set von Informationen sein, welche zur Ansteuerung von Aktuatoren eines Kraftfahrzeuges dienen können, um das Kraftfahrzeug in eine gewünschte Richtung zu bewegen.

Ein Steuerungszustand im Sinne der Erfindung kann dabei ein Zustand sein, in welchem sich ein Aktuator des Kraftzeuges befindet. Solch ein Steuerungszustand kann dabei einer entsprechenden Information des Steuerungssets zu einem bestimmten Zeitpunkt entsprechen.

Eine Fahrzeugbewegungsmodellierungsfunktion im Sinne der Erfindung kann dabei Funktion sein, welche die Bewegung eines Kraftfahrzeuges modellieren kann. Dabei kann die Fahrzeugbewegungsmodellierungsfunktion in einem einfachen Fall eine analytische Funktion sein. In komplexeren Fällen kann die Fahrzeugbewegungsmodellierungsfunktion eine nicht-analytische Funktion sein. Auch können zur Abbildung des Fahrzeugbewegungsmodells mehrere Funktionen beschrieben sein, welche gemeinsam die Fahrzeugbewegungsmodellierungsfunktion ergeben.

Ein kinematisches Bewegungsmodell des Kraftfahrzeuges im Sinne der Erfindung kann dabei ein Teil der Fahrzeugbewegungsmodellierungsfunktion sein. Das kinematische Bewegungsmodell kann dabei das Beschleunigungs- und Bremsverhalten eines spezifischen Kraftfahrzeuges oder Kraftfahrzeugmodells abbilden. Des Weiteren können auch weitere Bewegungsinformationen des Kraftfahrzeuges in dem kinematischen Modell abgebildet werden. In einem einfachen Fall kann das kinematische Bewegungsmodell eine oder mehrere analytische Funktionen aufweisen. In komplexeren Fällen kann das kinematische Bewegungsmodell auch eine oder mehrere nicht-analytische Funktionen aufweisen.

Ein Solver im Sinne der Erfindung kann dabei ein spezielles mathematisches Programm sein, welches zur Lösung eines speziellen mathematischen Problems genutzt werden kann. Der Solver kann dabei zur Lösung eines Problems sowohl einen analytischen als auch einen numerischen Ansatz vorsehen. Vorzugsweise handelt es sich bei dem Solver um ein mathematisches Programm, welches das ihm gestellte Problem numerisch lösen kann.

Ein Steuerprofil im Sinne der Erfindung kann dabei zur Steuerung eines Kraftfahrzeuges fungieren, um vorzugsweise das Kraftfahrzeug entlang einer bestimmten in dem Steuerprofil implizit enthaltenen Trajektorie zu bewegen. Bei dem Steuerprofil kann es sich beispielsweise um einen Datensatz an Steuerprofilspezifischen Informationen handeln, das Steuerprofil kann jedoch auch mathematische Funktionen aufweisen, aus welchen Steuerinformationen zur Kraftfahrzeugsteuerung zeitabhängig bestimmt werden können. Auch kann das Steuerprofil eine bildhafte Darstellung einer zeitabhängigen Funktion aufweisen, aus welcher zur Kraftfahrzeugsteuerung benötigte Steuerinformationen beziehungsweise Steuerwerte, zeitabhängig ermittelbar sein können.

Durch die erfindungsgemäße Lehre wird der Vorteil erreicht, dass für das Kraftfahrzeug eine tatsächlich auch nachfahrbare Trajektorie ermittelt werden kann.

Bevor nachfolgend Ausgestaltungen der Erfindung eingehender beschrieben werden, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit in der Beschreibung und den Ansprüchen der Singular verwendet wird ist dabei jeweils der Plural mitumfasst, soweit der Kontext dies nicht explizit ausschließt.

Nachfolgend werden weitere exemplarische Ausgestaltungen der erfindungsgemäßen Vorrichtung erläutert.

Entsprechend einer ersten exemplarischen Ausgestaltung weist das Verfahren auf, dass das erste Positionsset zwei Raumkoordinaten und eine Richtungsinformation aufweist wobei die Raumkoordinaten indikativ sind, für eine räumliche Position der Trajektorie am Trajektorienanfang, und wobei die Richtungsinformation indikativ ist für eine Tangente der Trajektorie am Trajektorienanfang. Ferner weist das Verfahren auf, dass das zweite Positionsset zwei Raumkoordinaten und eine Richtungsinformation aufweist, wobei die Raumkoordinaten indikativ sind, für eine räumliche Position der Trajektorie am Trajektorienende, und wobei die Richtungsinformation indikativ ist, für eine Tangente der Trajektorie am Trajektorienende.

Eine Raumkoordinate im Sinne der Erfindung meint dabei eine Achsenbezeichnung in einem Koordinatensystem. Das Koordinatensystem kann dabei gewöhnlich beliebig gewählt werden. Beispielsweise kann ein Koordinatensystem mit Polarkoordinaten gewählt werden, ebenso wie ein Koordinatensystem mit nicht-orthogonalen Basisvektoren. Vorzugsweise handelt es sich um ein kartesisches Koordinatensystem. Das Koordinatensystem kann dabei verwendet werden, um eine Kraftfahrzeugposition örtlich zu beschreiben.

Eine Richtungsinformation im Sinne der Erfindung meint dabei eine Information bezüglich einer Ausrichtung des Kraftfahrzeuges am entsprechenden Ort im Raum.

Auf diese Weise kann der Beginn einer Trajektorie als eine Kraftfahrzeugposition und eine Kraftfahrzeugausrichtung am Anfang der Trajektorie festgelegt werden. Ebenso kann das Ende der Trajektorie als eine Kraftfahrzeugposition und eine Kraftfahrzeugausrichtung am Ende der Trajektorie festgelegt werden.

Diese Ausgestaltung weist den Vorteil auf, dass damit auf einfache und präzise Weise die räumliche Position und räumliche Ausrichtung des Kraftfahrzeuges am gewünschten Start- und Zielort angegebenen werden kann. Somit kann für die zu fahrende Strecke, also die zu fahrende Trajektorie, sowohl zu Streckenbeginn als auch am Streckenende die Ausrichtung des Kraftfahrzeuges am entsprechenden Ort angegeben werden.

Entsprechend einer weiteren exemplarischen Ausgestaltung weist das Verfahren ferner auf, dass das erste Steuerungsset eine erste Steuerungsinformation aufweist, welche indikativ ist, für eine Position einer Lenkung des Kraftfahrzeuges am Trajektorienanfang. Und ferner weist das Verfahren auf, dass das zweite Steuerungsset eine zweite Steuerungsinformation aufweist, welche indikativ ist, für die Position der Lenkung des Kraftfahrzeuges am Trajektorienende.

Die Position der Lenkung im Sinne der Erfindung meint dabei eine Stellgröße, welche zur Lenkung des Kraftfahrzeuges benötigt wird. Im einfachsten Fall kann es sich dabei um die Winkelstellung eines Lenkrades des Kraftfahrzeuges handeln. Es kann mit der Position der Lenkung jedoch auch eine Stellgröße gemeint sein, wie beispielsweise ein Winkel eines Aktuators, auf welche eines oder mehrere Räder eines Kraftfahrzeuges einzeln oder auch paarweise eingestellt ist oder werden soll.

Diese Ausgestaltung weist den Vorteil auf, dass damit ein unmittelbarer Bezug zwischen der vom Kraftfahrzeug zu fahrenden Trajektorie und der Kraftfahrzeuglenkung hergestellt werden kann.

Entsprechend einer weiteren exemplarischen Ausgestaltung weist das Verfahren ferner auf: Aufteilen der Trajektorie in einen ersten Bereich und in einen zweiten Bereich. Der erste Bereich ist dabei indikativ für eine Annäherungsphase des Kraftfahrzeuges an das Trajektorienende. Der zweite Bereich ist dabei indikativ für eine Korrekturphase des Kraftfahrzeuges vor Erreichen des Trajektorienendes.

Eine Annäherungsphase im Sinne der Erfindung meint dabei eine erste Phase einer Fahrt entlang einer Strecke. Dabei kann die Annäherungsphase einem natürlichen menschlichen Fahrverhalten, insbesondere Lenkverhalten und/oder Beschleunigungsverhalten, nachempfunden sein, welches ein Fahrer des Kraftfahrzeuges zum Erreichen eines Zielortes vornehmen würde.

Eine Korrekturphase im Sinne der Erfindung meint dabei eine weitere Phase der Fahrt entlang der Strecke. Dabei kann die Korrekturphase einem natürlichen menschlichen Fahrverhalten, insbesondere Lenkverhalten und/oder Beschleunigungsverhalten, nachempfunden sein, welches ein Fahrer des Kraftfahrzeuges in der Nähe des zu erreichenden Zielortes vornehmen würde.

Diese Ausgestaltung weist den Vorteil auf, dass die zu fahrende Trajektorie mittelbar einer Nachbildung eines natürlichen Fahrverhaltens eines Kraftfahrers entsprechen kann.

Entsprechend einer weiteren exemplarischen Ausgestaltung weist das Verfahren ferner auf, dass der erste Profilinformationswert sich in der Annäherungsphase befindet, und dass der zweite Profilinformationswert sich in der Korrekturphase befindet.

Diese Ausgestaltung weist den Vorteil auf, dass damit ein Steuerprofil ermittelt werden kann, welches einem natürlichen Fahrverhalten eines Kraftfahrers nachempfunden sein kann.

Entsprechend einer weiteren exemplarischen Ausgestaltung weist das Verfahren ferner auf, dass der erste Profilinformationswert des Steuerprofilinformationssets indikativ für einen ersten Punkt mit waagerechter Tangente des Steuerprofils ist, und dass der zweite Profilinformationswert des Steuerprofilinformationssets indikativ für einen zweiten Punkt mit waagerechter Tangente des Steuerprofils ist.

Ein Punkt mit waagerechter Tangente im Sinne der Erfindung meint dabei einen Punkt beziehungsweise einen Ort einer mathematischen Funktion beziehungsweise Kurve, welcher eine Steigung von Null aufweist.

Diese Ausgestaltung weist den Vorteil auf, dass damit eine Möglichkeit bereit gestellt werden kann, mit welcher der erste Bereich von dem zweiten Bereich, unterschieden werden kann.

Damit kann es ermöglicht werden ein entsprechendes natürliches Fahrverhalten eines Kraftfahrers besser nachzubilden.

Entsprechend einer weiteren exemplarischen Ausgestaltung weist das Verfahren ferner auf, dass das Steuerprofilinformationsset einen dritten Profilinformationswert aufweist. Dabei ist der dritte Profilinformationswert indikativ für eine Strecke der Trajektorie.

Eine Strecke der Trajektorie im Sinne der Erfindung meint dabei den gesamten Weg der Trajektorie. Diese kann der zurückzulegenden Weglänge entsprechen, die das Kraftfahrzeug zurück legen muss, um entlang der gesamten Trajektorie zu fahren.

Diese Ausgestaltung weist den Vorteil auf, dass für das Kraftfahrzeug die Weglänge der Trajektorie für die Bestimmung des Steuerprofils genutzt werden kann. Somit kann das Steuerprofil noch besser einem menschlichen Fahrverhalten, vorzugsweise einem menschlichen optimalen Fahrverhalten, für den zu fahrenden Weg nachempfunden werden.

Entsprechend einer weiteren exemplarischen Ausgestaltung weist das Verfahren ferner auf, dass das erste Steuerungsset eine dritte Steuerungsinformation aufweist, welche indikativ für eine Geschwindigkeit des Kraftfahrzeuges am Trajektorienanfang ist. Und ferner weist das Verfahren auf, dass das zweite Steuerungsset eine vierte Steuerungsinformation aufweist, welche indikativ für eine Geschwindigkeit des Kraftfahrzeuges am Trajektorienende ist.

Diese Ausgestaltung weist den Vorteil auf, dass damit mehrere aufeinander folgende Trajektorien bestimmt werden können, welche auf einfache Weise unmittelbar miteinander verbindbar sein können, da die Geschwindigkeit am Trajektorienende einer ersten Trajektorie dadurch gleich der Geschwindigkeit einer daran anzuschließenden weiteren Trajektorie am Trajektorienanfang der weiteren Trajektorie gewählt werden kann.

Entsprechend einer weiteren exemplarischen Ausgestaltung weist das Verfahren ferner auf, dass das erste Steuerungsset eine fünfte Steuerungsinformation aufweist, welche indikativ für eine Lenkungsrate des Kraftfahrzeuges am Trajektorienanfang ist. Und ferner weist das Verfahren auf, dass das zweite Steuerungsset eine sechste Steuerungsinformation aufweist, welche indikativ für eine Lenkungsrate des Kraftfahrzeuges am Trajektorienende ist.

Eine Lenkungsrate im Sinne der Erfindung meint dabei eine zeitabhängige Änderung der Position der Lenkung, somit eine Änderungsgeschwindigkeit der Position der Lenkung.

Diese Ausgestaltung weist den Vorteil auf, dass damit für die Ermittlung der Trajektorie vorgebbar sein kann, ob ein eher weiches oder ein eher hartes Lenkverhalten bei der Fahrt entlang der zu ermittelnden Trajektorie beziehungsweise des Steuerprofils erwünscht ist.

Ferner weist diese Ausgestaltung den Vorteil auf, dass durch ein Vorgeben der Lenkungsrate zu Beginn und am Ende der Trajektorie eine kontinuierliche Steuerungsrate erhalten werden kann, wenn mehrere Trajektorien zu einer Gesamttrajektorie verbunden werden sollen.

Entsprechend einer weiteren exemplarischen Ausgestaltung weist das Verfahren ferner auf: Bestimmen einer Steuerungsfunktion des Kraftfahrzeuges in Abhängigkeit des Steuerprofils. Dabei ist die Steuerungsfunktion indikativ für eine Soll-Steuerung des Kraftfahrzeuges in Abhängigkeit der Zeit.

Diese Ausgestaltung weist den Vorteil auf, dass aus dem Steuerprofil ohne direkte konkrete Bestimmung der Trajektorie eine Steuerung des Kraftfahrzeuges ermöglicht werden kann.

Entsprechend einer weiteren exemplarischen Ausgestaltung weist das Verfahren ferner auf, dass die Steuerungsfunktion aufweist: Eine Lenkungsfunktion des Kraftfahrzeuges in Abhängigkeit des Steuerprofils. Dabei ist die Lenkungsfunktion indikativ für eine Soll-Lenkung des Kraftfahrzeuges in Abhängigkeit der Zeit. Und ferner weist die Steuerungsfunktion auf: Eine Geschwindigkeitsfunktion des Kraftfahrzeuges in Abhängigkeit des Steuerprofils. Dabei ist die Geschwindigkeitsfunktion indikativ für eine Soll-Geschwindigkeit des Kraftfahrzeuges in Abhängigkeit der Zeit.

Diese Ausgestaltung weist den Vorteil auf, dass unmittelbar mittels des Steuerprofils die Kraftfahrzeugsteuerung ermöglicht werden kann, um auf einem bestimmten Weg, der dem Fahrverhalten eines Kraftfahrers nachempfundenen ist, eine gewünschte Zielposition zu erreichen.

Entsprechend einer weiteren exemplarischen Ausgestaltung weist das Verfahren ferner auf: Bereitstellen eines Nebenbedingungssets, wobei das Nebenbedingungsset mindestens eine Information bezüglich einer Nebenbedingung einer Steuerung des Kraftfahrzeuges aufweist. Und ferner weist das Verfahren auf, dass das Ermitteln des Steuerprofilinformationssets darüber hinaus in Abhängigkeit des Nebenbedingungssets erfolgt.

Ein Nebenbedingungsset im Sinne der Erfindung meint dabei ein Set von Informationen bezüglich bestimmter Werte, wie beispielsweise von, für die Kraftfahrzeugsteuerung zu nutzenden Aktuatoren. Diese Werte können beispielsweise Grenzwerte dieser Aktuatoren sein. Dieses Set von Informationen kann dabei als Nebenbedingungsset für den Solver fungieren.

Diese Ausgestaltung weist den Vorteil auf, dass damit ein noch besser fahrbares Steuerprofil ermittelt werden kann.

Entsprechend einer weiteren exemplarischen Ausgestaltung weist das Verfahren ferner auf, dass das Nebenbedingungsset indikativ für die Grenze einer Kraftfahrzeuglenkung ist, und das Nebenbedingungsset aufweist: Eine erste Nebenbedingung, welche indikativ für eine maximale Position der Lenkung im Uhrzeigersinn ist; und eine zweite Nebenbedingung, welche indikativ für eine maximale Position der Lenkung entgegen dem Uhrzeigersinn ist.

Diese Ausgestaltung weist den Vorteil auf, dass damit ein noch besser fahrbares Steuerprofil ermittelt werden kann.

Die Erfindung erlaubt es somit, ein Steuerprofil für ein Kraftfahrzeug zu bestimmen, um von einer gewünschten Startposition aus eine gewünschte Zielposition zu erreichen. Insbesondere kann durch wiederholtes Anwenden des erfindungsgemäßen Verfahrens ein Steuerprofil für ein autonomes Kraftfahrzeug ermittelt werden, welches einem natürlichen menschlichen Fahrverhalten zum Erreichen der Zielposition entspricht. Ferner kann somit ein Steuerprofil für das Kraftfahrzeug ermittelt werden, welches eindeutig und fahrbar ist.

Bislang gängige Verfahren erlauben es nicht Randbedingungen für die Aktuatoren vorzugeben, das heißt auch die entsprechenden Aktuatorenzustände am Ende der Trajektorie festzulegen. Somit kann es bislang zu Problemen kommen, da die sich ergebenden Endzustände der Aktuatoren möglicherweise nicht geeignet sind die Bewegung in gewünschter Weise fortzusetzen. Zum Beispiel könnte es passieren, dass zwar die vorgegebene Position und Orientierung des Fahrzeugs auf einer geraden Straße am Ende der Trajektorie erreicht werden, die Lenkung aber nicht in der gewünschten (Neutral-)Stellung ist. Es wäre dann unmöglich in der folgenden Trajektorie die Spur zu halten. Die vorliegende Erfindung kann diesen Nachteil beheben.

Die Erfindung wird nachfolgend eingehender an Hand der Figuren erläutert werden. In diesen zeigen:
Fig. 1 eine schematische Darstellung eines vorgeschlagenen Verfahrens gemäß einer beispielhaften Ausgestaltung der Erfindung;
Fig. 2 eine schematische Darstellung eines vorgeschlagenen Verfahrens gemäß einer weiteren beispielhaften Ausgestaltung der Erfindung;
Fig. 3 eine schematische Darstellung eines typischen Lenkverhaltens eines menschlichen Fahrers, wie es zur Nachbildung des Lenkverhaltens gemäß einer weiteren beispielhaften Ausgestaltung der Erfindung herangezogen wird;
Fig. 4 eine schematische Darstellung eines beispielhaften Steuerprofils gemäß einer weiteren beispielhaften Ausgestaltung der Erfindung; und
Fig. 5 eine schematische Darstellung dreier beispielhafter Trajektorien und jeweils zugehöriger Steuerprofile gemäß einer weiteren beispielhaften Ausgestaltung der Erfindung.

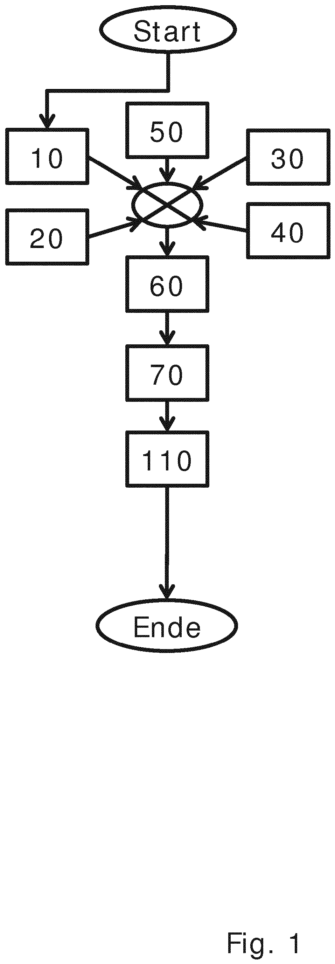

Fig. 1 zeigt eine schematische Darstellung eines vorgeschlagenen Verfahrens gemäß einer beispielhaften Ausgestaltung der Erfindung.

Dabei zeigt Fig. 1 eine schematische Darstellung eines Trajektorien-Planungsverfahrens zur Ermittlung eines Steuerprofils für ein Kraftfahrzeug, insbesondere für ein autonom fahrendes Kraftfahrzeug, das Verfahren aufweisend: Bereitstellen eines ersten Positionssets 10, wobei das erste Positionsset 10 mindestens eine Information bezüglich einer Anfangsbedingung einer Trajektorie 200 an einem Trajektorienanfang der Trajektorie 200 aufweist. Bereitstellen eines zweiten Positionssets 20, wobei das zweite Positionsset 20 mindestens eine Information bezüglich einer Endbedingung der Trajektorie 200 an einem Trajektorienende der Trajektorie 200 aufweist. Bereitstellen eines ersten Steuerungssets 30, wobei das erste Steuerungsset 30 mindestens eine Information bezüglich eines ersten Steuerungszustandes des Kraftfahrzeuges 100 am Trajektorienanfang aufweist. Bereitstellen eines zweiten Steuerungssets 40, wobei das zweite Steuerungsset 40 mindestens eine Information bezüglich eines zweiten Steuerungszustandes des Kraftfahrzeuges am Trajektorienende aufweist. Bereitstellen einer Fahrzeugbewegungsmodellierungsfunktion 50, wobei die Fahrzeugbewegungsmodellierungsfunktion ein kinematisches Bewegungsmodell des Kraftfahrzeuges 100 aufweist. Bereitstellen eines Solvers 60 und ermitteln eines Steuerprofilinformationssets 70 mittels Anwenden des Solvers 60 auf die Fahrzeugbewegungsmodellierungsfunktion 50 in Abhängigkeit des ersten Positionssets 10, des zweiten Positionssets 20, des ersten Steuerungssets 30 und des zweiten Steuerungssets 40, wobei das Steuerprofilinformationsset 70 zwei Profilinformationswerte 71, 72 aufweist. Dabei sind die Profilinformationswerte 71, 72 indikativ für die Trajektorie 200. Und bestimmen eines Steuerprofils 110 für das Kraftfahrzeug 100 in Abhängigkeit des Steuerprofilinformationssets 70, wobei das Steuerprofil 110 indikativ für die Trajektorie 200 ist.

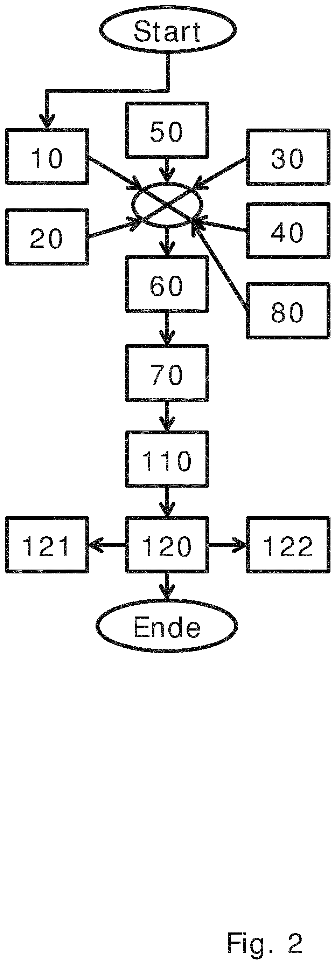

Fig. 2 zeigt eine schematische Darstellung eines vorgeschlagenen Verfahrens gemäß einer weiteren beispielhaften Ausgestaltung der Erfindung.

Dabei zeigt Fig. 2 eine schematische Darstellung einer gegenüber dem Verfahren aus Fig.1 erweiterten Verfahren. Das zuvor zu Fig. 1 Gesagte gilt entsprechend für Fig. 2 fort.

Wie Fig. 2 entnommen werden kann, weist das Verfahren ferner auf: Bestimmen einer Steuerungsfunktion 120 des Kraftfahrzeuges 100 in Abhängigkeit des Steuerprofils 110, wobei die Steuerungsfunktion 120 indikativ für eine Soll-Steuerung des Kraftfahrzeuges 100 in Abhängigkeit der Zeit ist. Ferner weist die Steuerungsfunktion 120 eine Lenkungsfunktion 121 des Kraftfahrzeuges 100 in Abhängigkeit des Steuerprofils 110 und eine Geschwindigkeitsfunktion 122 des Kraftfahrzeuges 100 in Abhängigkeit des Steuerprofils 110 auf. Dabei ist die Lenkungsfunktion 121 indikativ für eine Soll-Lenkung des Kraftfahrzeuges 100 in Abhängigkeit der Zeit, und die Geschwindigkeitsfunktion 122 ist indikativ für eine Soll-Geschwindigkeit des Kraftfahrzeuges 100 in Abhängigkeit der Zeit. Das Verfahren weist ferner auf: Bereitstellen eines Nebenbedingungssets 80, wobei das Nebenbedingungsset 80 mindestens eine Information bezüglich einer Nebenbedingung einer Steuerung des Kraftfahrzeuges 100 aufweist. Und das Ermitteln des Steuerprofilinformationssets 70 erfolgt darüber hinaus in Abhängigkeit des Nebenbedingungssets 80. Ferner ist dabei das Nebenbedingungsset 80 indikativ für die Grenze einer Kraftfahrzeuglenkung, und das Nebenbedingungsset 80 weist eine erste Nebenbedingung auf, welche indikativ für eine maximale Position der Lenkung im Uhrzeigersinn ist, und eine zweite Nebenbedingung, welche indikativ für eine maximale Position der Lenkung entgegen dem Uhrzeigersinn ist.

Während des Ausführen des Solvers 60 kann ein Aufteilen der Trajektorie 200 in einen ersten Bereich und in einen zweiten Bereich erfolgen (in Fig.2 nicht dargestellt), wobei der erste Bereich indikativ für eine Annäherungsphase des Kraftfahrzeuges 100 an das Trajektorienende ist, und wobei der zweite Bereich indikativ für eine Korrekturphase des Kraftfahrzeuges 100 vor Erreichen des Trajektorienendes ist.

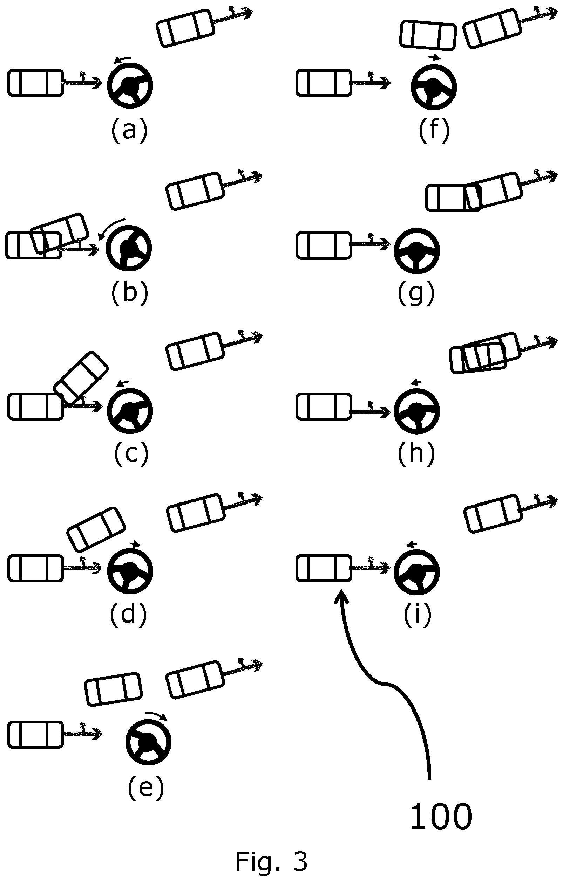

Fig. 3 zeigt eine schematische Darstellung eines typischen Lenkverhaltens eines menschlichen Fahrers, wie es zur Nachbildung des Lenkverhaltens gemäß einer weiteren beispielhaften Ausgestaltung der Erfindung herangezogen wird.

Fig. 3 zeigt dabei das Lenkverhalten eines menschlichen Fahrers beim Anfahren an ein Ziel. Dieses Lenkverhalten kann dabei in eine Annäherungsphase und in eine Korrekturphase eingeteilt werden. Die Annäherungsphase in dem Beispiel der Fig. 3 erfolgt in den Lenkausschnitten "(a)" bis "(e)", wohingegen die Korrekturphase in den Lenkausschnitten "(f)" bis "(i)" der Fig. 3 erfolgt. Während der Annährungsphase, wie beispielsweise bei einem Parallel-Einparkvorgang, kommt der Fahrer dabei seinem avisierten Ziel näher, wobei er gewisse Grenzen einhält, wie beispielsweise Abstände zu den vor- und hinter der Parklücke befindlichen Fahrzeugen. In der sich daran anschließenden Korrekturphase erreicht der Fahrer sein Ziel, im optimalen Fall mit einer hohen Präzision, indem wer beispielsweise sein Kraftfahrzeug in der avisierten Parklücke abstellt und die Räder entsprechend ausrichtet.

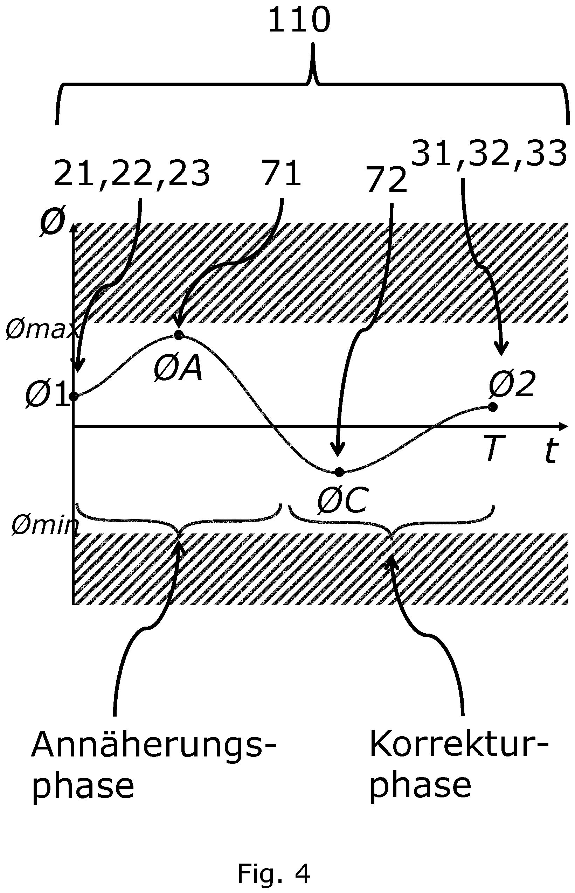

Fig. 4 zeigt eine schematische Darstellung eines beispielhaften Steuerprofils gemäß einer weiteren beispielhaften Ausgestaltung der Erfindung.

Wie Fig. 4 entnommen werden kann, befindet sich der erste Profilinformationswert 71 in der Annäherungsphase, und der zweite Profilinformationswert 72 befindet sich in der Korrekturphase.

Dabei ist der erste Profilinformationswert 71 des Steuerprofilinformationssets 70 indikativ für einen ersten Punkt mit waagerechter Tangente des Steuerprofils 110, und der zweite Profilinformationswert 72 des Steuerprofilinformationssets 70 ist indikativ für einen zweiten Punkt mit waagerechter Tangente des Steuerprofils 110.

Ferner weist das Steuerprofilinformationsset 70 einen dritten Profilinformationswert 73 auf, welcher indikativ für eine Strecke der Trajektorie 200 ist. Die Zeitdauer T entspricht dabei der Ausdehnung des Steuerprofils 110 in einer Raumrichtung. Dabei entspricht die Raumrichtung der Zeitachse t des Steuerprofils 110. Somit ergibt sich ein direkter Zusammenhang zwischen der Strecke der Trajektorie 200 und der Zeitdauer T der Trajektorie.

Die zwei ersten Raumkoordinaten 21, 22 und die erste Richtungsinformation 23 des ersten Positionssets 20 (in Fig. 4 nicht dargestellt) bestimmen den Beginn des Steuerprofils 110, wohingegen die zwei zweiten Raumkoordinaten 31, 32 und die zweite Richtungsinformation 33 des zweiten Positionssets 30 (in Fig. 4 nicht dargestellt) das Ende des Steuerprofils 110 bestimmen.

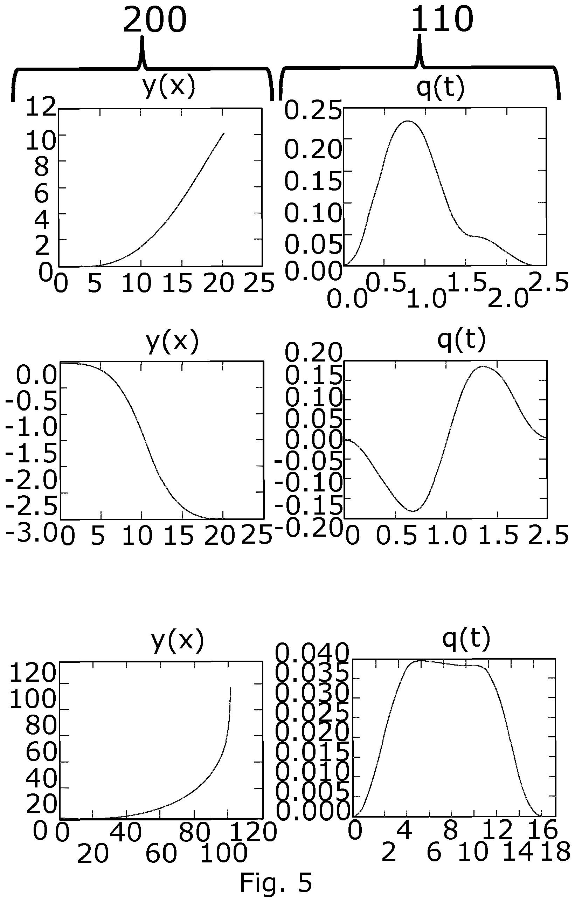

Fig. 5 zeigt eine schematische Darstellung dreier beispielhafter Trajektorien und jeweils zugehöriger Steuerprofile gemäß einer weiteren beispielhaften Ausgestaltung der Erfindung.

In der linken Hälfte der Fig. 5 sind drei Trajektorien 200 dargestellt. In der rechten Hälfte der Fig. 5 sind die jeweils zugehörigen Lenkungsfunktionen 121 dargestellt.

Die oberste Trajektorie 200 stellt ein generelles Fahrmanöver in zwei Dimensionen dar. In der Mitte ist die Trajektorie 200 eines Beispiels eines Spurwechsels dargestellt. Die untere Trajektorie 200 zeigt einen beispielhaften 90° Abbiegevorgang.

Aus einer Lenkungsfunktion 121 kann unter zu Hilfenahme einer zugehörigen Geschwindigkeitsfunktion 122 (in Fig. 5 nicht gezeigt) eindeutig auf eine zugehörige Trajektorie 200 geschlossen werden. Somit kann es ausreichend sein, ein Steuerprofil 110 (in Fig. 5 nicht gezeigt) für einen benötigten Pfad zu bestimmen, ohne dass die konkrete Bestimmung der betreffenden Trajektorie 200 notwendig wird. Somit kann die Pfadbestimmung wesentlich vereinfacht werden und darüber hinaus kann dies zu einer optimaleren Pfadbestimmung führen, welche die realen physikalischen Bedingungen des entsprechenden Kraftfahrzeuges besser berücksichtigen kann.

Aus dem Steuerprofil 110 kann zudem eine Steuerungsfunktion 120 (in Fig. 5 nicht dargestellt) bestimmt werden, die indikativ für eine Soll-Steuerung des Kraftfahrzeuges 100 in Abhängigkeit der Zeit ist. Die Steuerungsfunktion 120 kann eine Lenkungsfunktion 121 des Kraftfahrzeuges 100 (in Fig. 5 nicht dargestellt) in Abhängigkeit des Steuerprofils 110 aufweisen, wobei die Lenkungsfunktion 121 indikativ sein kann, für eine Soll-Lenkung des Kraftfahrzeuges 100 in Abhängigkeit der Zeit. Ferner kann die Steuerungsfunktion 120 eine Geschwindigkeitsfunktion 122 (in Fig. 5 nicht dargestellt) des Kraftfahrzeuges 100 in Abhängigkeit des Steuerprofils 110 aufweisen, wobei die Geschwindigkeitsfunktion 122 indikativ sein kann, für eine Soll-Geschwindigkeit des Kraftfahrzeuges 100 in Abhängigkeit der Zeit.

Die Erfindungsidee kann wie folgt zusammengefasst werden. Es wird ein Verfahren bereit gestellt, mit dem ein zu bestimmender Pfad ermittelt werden kann, indem ein Steuerprofil bestimmt wird, welches indikativ für eine Trajektorie ist, welche die realen physikalischen Bedingungen für das entsprechende Kraftfahrzeug berücksichtigt. Aus dem Steuerprofil kann darüber hinaus unmittelbar eine Steuerungsfunktion bestimmt werden, welche eine Lenkungsfunktion und eine Geschwindigkeitsfunktion entlang des zu fahrenden Pfades aufweist, wodurch ein autonom fahrendes Kraftfahrzeug ordnungsgemäß zu seinem Zielort gesteuert werden kann.

### Bezugszeichenliste

- 10: erstes Positionsset
- 20: zweites Positionsset
- 21, 22: zwei erste Raumkoordinaten
- 23: erste Richtungsinformation
- 30: erstes Steuerungsset
- 31, 32: zwei zweite Raumkoordinaten
- 33: zweite Richtungsinformation
- 40: zweites Steuerungsset
- 50: Fahrzeugbewegungsmodellierungsfunktion
- 60: Solver
- 70: Steuerprofilinformationsset
- 80: Nebenbedingungsset
- 100: Kraftfahrzeug
- 110: Steuerprofil
- 120: Steuerungsfunktion
- 121: Lenkungsfunktion
- 122: Geschwindigkeitsfunktion
- 200: Trajektorie

## Patentansprüche

1. Ein Trajektorien-Planungsverfahren zur Ermittlung eines Steuerprofils für ein Kraftfahrzeug, insbesondere für ein autonom fahrendes Kraftfahrzeug, das Verfahren aufweisend:
- Bereitstellen eines ersten Positionssets (10), das erste Positionsset (10) aufweisend mindestens eine Information bezüglich einer Anfangsbedingung einer Trajektorie (200) an einem Trajektorienanfang der Trajektorie (200),
- Bereitstellen eines zweiten Positionssets (20), das zweite Positionsset (20) aufweisend mindestens eine Information bezüglich einer Endbedingung der Trajektorie (200) an einem Trajektorienende der Trajektorie (200),
- Bereitstellen eines ersten Steuerungssets (30), das erste Steuerungsset (30) aufweisend mindestens eine Information bezüglich eines ersten Steuerungszustandes des Kraftfahrzeuges (100) am Trajektorienanfang,
- Bereitstellen eines zweiten Steuerungssets (40), das zweite Steuerungsset (40) aufweisend mindestens eine Information bezüglich eines zweiten Steuerungszustandes des Kraftfahrzeuges am Trajektorienende,
- Bereitstellen einer Fahrzeugbewegungsmodellierungsfunktion (50), die Fahrzeugbewegungsmodellierungsfunktion aufweisend ein kinematisches Bewegungsmodell des Kraftfahrzeuges (100),
- Bereitstellen eines Solvers (60),
- Ermitteln eines Steuerprofilinformationssets (70) mittels Anwenden des Solvers (60) auf die Fahrzeugbewegungsmodellierungsfunktion (50) in Abhängigkeit des ersten Positionssets (10), des zweiten Positionssets (20), des ersten Steuerungssets (30) und des zweiten Steuerungssets (40), wobei das Steuerprofilinformationsset (70) zwei Profilinformationswerte (71, 72) aufweist, wobei die Profilinformationswerte (71, 72) indikativ sind, für die Trajektorie (200), und
- Bestimmen eines Steuerprofils (110) für das Kraftfahrzeug (100) in Abhängigkeit des Steuerprofilinformationssets (70), wobei das Steuerprofil (110) indikativ für die Trajektorie (200) ist.

2. Das Verfahren gemäß Anspruch 1, wobei
das erste Positionsset (20) zwei erste Raumkoordinaten (21, 22) und eine erste Richtungsinformation (23) aufweist,
wobei die ersten Raumkoordinaten (21, 22) indikativ sind, für eine räumliche Position der Trajektorie (200) am Trajektorienanfang, und
wobei die erste Richtungsinformation (23) indikativ ist für eine Tangente der Trajektorie (200) am Trajektorienanfang; und wobei
das zweite Positionsset (30) zwei zweite Raumkoordinaten (31, 32) und eine zweite Richtungsinformation (33) aufweist,
wobei die zweiten Raumkoordinaten (31, 32) indikativ sind, für eine räumliche Position der Trajektorie (200) am Trajektorienende, und
wobei die zweite Richtungsinformation (33) indikativ ist, für eine Tangente der Trajektorie (200) am Trajektorienende.

3. Das Verfahren gemäß Anspruch 1 oder 2, wobei
das erste Steuerungsset (40) eine erste Steuerungsinformation aufweist, welche indikativ ist, für eine Position einer Lenkung des Kraftfahrzeuges (100) am Trajektorienanfang; und wobei
das zweite Steuerungsset (50) eine zweite Steuerungsinformation aufweist, welche indikativ ist, für die Position der Lenkungdes Kraftfahrzeuges (100) am Trajektorienende.

4. Das Verfahren gemäß irgendeinem der vorhergehenden Ansprüche, das Verfahren ferner aufweisend:
- Aufteilen der Trajektorie (200) in einen ersten Bereich und in einen zweiten Bereich, wobei der erste Bereich indikativ ist, für eine Annäherungsphase des Kraftfahrzeuges (100) an das Trajektorienende, und wobei
der zweite Bereich indikativ ist, für eine Korrekturphase des Kraftfahrzeuges (100) vor Erreichen des Trajektorienendes.

5. Das Verfahren gemäß Anspruch 4, wobei der erste Profilinformationswert (71) sich in der Annäherungsphase befindet, und wobei der zweite Profilinformationswert (72) sich in der Korrekturphase befindet.

6. Das Verfahren gemäß irgendeinem der vorhergehenden Ansprüche, wobei
der erste Profilinformationswert (71) des Steuerprofilinformationssets (70) indikativ ist, für einen ersten Punkt mit waagerechter Tangente des Steuerprofils (110), und wobei
der zweite Profilinformationswert (72) des Steuerprofilinformationssets (70) indikativ ist, für einen zweiten Punkt mit waagerechter Tangente des Steuerprofils (110).

7. Das Verfahren gemäß irgendeinem der vorhergehenden Ansprüche, wobei
das Steuerprofilinformationsset (70) einen dritten Profilinformationswert (73) aufweist, und wobei der dritte Profilinformationswert (73) indikativ ist, für eine Strecke (T) der Trajektorie (200).

8. Das Verfahren gemäß irgendeinem der vorhergehenden Ansprüche, wobei
das erste Steuerungsset (40) eine dritte Steuerungsinformation aufweist, welche indikativ ist, für eine Geschwindigkeit des Kraftfahrzeuges (100) am Trajektorienanfang; und wobei
das zweite Steuerungsset (50) eine vierte Steuerungsinformation aufweist, welche indikativ ist, für eine Geschwindigkeit des Kraftfahrzeuges (100) am Trajektorienende.

9. Das Verfahren gemäß irgendeinem der vorhergehenden Ansprüche, wobei
das erste Steuerungsset (40) eine fünfte Steuerungsinformation aufweist, welche indikativ ist, für eine Lenkungsrate des Kraftfahrzeuges (100) am Trajektorienanfang; und wobei
das zweite Steuerungsset (50) eine sechste Steuerungsinformation aufweist, welche indikativ ist, für eine Lenkungsrate des Kraftfahrzeuges (100) am Trajektorienende.

10. Das Verfahren gemäß irgendeinem der vorhergehenden Ansprüche, das Verfahren ferner aufweisend:
- Bestimmen einer Steuerungsfunktion (120) des Kraftfahrzeuges (100) in Abhängigkeit des Steuerprofils (110), wobei die Steuerungsfunktion (120) indikativ ist, für eine Soll-Steuerung des Kraftfahrzeuges (100) in Abhängigkeit der Zeit.

11. Das Verfahren gemäß Anspruch 10, wobei die Steuerungsfunktion (120) aufweist:
- eine Lenkungsfunktion (121) des Kraftfahrzeuges (100) in Abhängigkeit des Steuerprofils (110), wobei die Lenkungsfunktion (121) indikativ ist, für eine Soll-Lenkung des Kraftfahrzeuges (100) in Abhängigkeit der Zeit, und
- eine Geschwindigkeitsfunktion (122) des Kraftfahrzeuges (100) in Abhängigkeit des Steuerprofils (110), wobei die Geschwindigkeitsfunktion (122) indikativ ist, für eine Soll-Geschwindigkeit des Kraftfahrzeuges (100) in Abhängigkeit der Zeit.

12. Das Verfahren gemäß irgendeinem der vorhergehenden Ansprüche, das Verfahren ferner aufweisend:
- Bereitstellen eines Nebenbedingungssets (80), das Nebenbedingungsset (80) aufweisend mindestens eine Information bezüglich einer Nebenbedingung einer Steuerung des Kraftfahrzeuges (100), und
- wobei das Ermitteln des Steuerprofilinformationssets (70) darüber hinaus in Abhängigkeit des Nebenbedingungssets (80) erfolgt.

13. Das Verfahren gemäß Anspruch 12, wobei
das Nebenbedingungsset (80) indikativ für die Grenze einer Kraftfahrzeuglenkung ist, und das Nebenbedingungsset (80) aufweist:
- eine erste Nebenbedingung, welche indikativ ist, für eine maximale Position der Lenkung im Uhrzeigersinn, und
- eine zweite Nebenbedingung, welche indikativ ist, für eine maximale Position der Lenkung entgegen dem Uhrzeigersinn.

## Claims

1. Trajectory planning method for ascertaining a control profile for a motor vehicle, in particular for an autonomously driving motor vehicle, the method comprising:
- providing a first position set (10), the first position set (10) having at least one piece of information relating to a starting condition of a trajectory (200) at a trajectory start of the trajectory (200),
- providing a second position set (20), the second position set (20) having at least one piece of information relating to an end condition of the trajectory (200) at a trajectory end of the trajectory (200),
- providing a first control set (30), the first control set (30) having at least one piece of information relating to a first control state of the motor vehicle (100) at the trajectory start,
- providing a second control set (40), the second control set (40) having at least one piece of information relating to a second control state of the motor vehicle at the trajectory end,
- providing a vehicle-movement modelling function (50), the vehicle-movement modelling function having a kinematic movement model of the motor vehicle (100),
- providing a solver (60),
- ascertaining a control-profile information set (70) by means of applying the solver (60) to the vehicle-movement modelling function (50) in dependence on the first position set (10), the second position set (20), the first control set (30) and the second control set (40), the control-profile information set (70) having two profile information values (71, 72), the profile information values (71, 72) being indicative of the trajectory (200), and
- determining a control profile (110) for the motor vehicle (100) in dependence on the control-profile information set (70), the control profile (110) being indicative of the trajectory (200).

2. Method according to Claim 1,
the first position set (20) having two first spatial coordinates (21, 22) and a first piece of directional information (23),
the first spatial coordinates (21, 22) being indicative of a spatial position of the trajectory (200) at the trajectory start, and
the first piece of directional information (23) being indicative of a tangent of the trajectory (200) at the trajectory start; and
the second position set (30) having two second spatial coordinates (31, 32) and a second piece of directional information (33),
the second spatial coordinates (31, 32) being indicative of a spatial position of the trajectory (200) at the trajectory end, and
the second piece of directional information (33) being indicative of a tangent of the trajectory (200) at the trajectory end.

3. Method according to Claim 1 or 2,
the first control set (40) having a first piece of control information, which is indicative of a position of a steering of the motor vehicle (100) at the trajectory start; and
the second control set (50) having a second piece of control information, which is indicative of the position of the steering of the motor vehicle (100) at the trajectory end.

4. Method according to any one of the preceding claims, the method also comprising:
- dividing the trajectory (200) into a first region and into a second region,
the first region being indicative of an approach phase of the motor vehicle (100) to the trajectory end, and the second region being indicative of a correction phase of the motor vehicle (100) before reaching the trajectory end.

5. Method according to Claim 4,
the first profile information value (71) being in the approach phase, and
the second profile information value (72) being in the correction phase.

6. Method according to any one of the preceding claims, the first profile information value (71) of the control-profile information set (70) being indicative of a first point with a horizontal tangent of the control profile (110), and
the second profile information value (72) of the control-profile information set (70) being indicative of a second point with a horizontal tangent of the control profile (110) .

7. Method according to any one of the preceding claims, the control-profile information set (70) having a third profile information value (73), and
the third profile information value (73) being indicative of a route (T) of the trajectory (200).

8. Method according to any one of the preceding claims, the first control set (40) having a third piece of control information, which is indicative of a speed of the motor vehicle (100) at the trajectory start; and
the second control set (50) having a fourth piece of control information, which is indicative of a speed of the motor vehicle (100) at the trajectory end.

9. Method according to any one of the preceding claims, the first control set (40) having a fifth piece of control information, which is indicative of a steering rate of the motor vehicle (100) at the trajectory start; and the second control set (50) having a sixth piece of control information, which is indicative of a steering rate of the motor vehicle (100) at the trajectory end.

10. Method according to any one of the preceding claims, the method also comprising:
- determining a control function (120) of the motor vehicle (100) in dependence on the control profile (110), the control function (120) being indicative of a desired control of the motor vehicle (100) in dependence on time.

11. Method according to Claim 10,
the control function (120) having:
- a steering function (121) of the motor vehicle (100) in dependence on the control profile (110),
the steering function (121) being indicative of a desired steering of the motor vehicle (100) in dependence on time, and
- a speed function (122) of the motor vehicle (100) in dependence on the control profile (110), the speed function (122) being indicative of a desired speed of the motor vehicle (100) in dependence on time.

12. Method according to any of the preceding claims, the method also comprising:
- providing a secondary-condition set (80), the secondary-condition set (80) having at least one piece of information concerning a secondary condition of a control of the motor vehicle (100), and
- the ascertaining of the control-profile information set also (70) taking place in dependence on the secondary-condition set (80).

13. Method according to Claim 12,
the secondary-condition set (80) being indicative of the limit of a motor vehicle steering, and the secondary-condition set (80) having:
- a first secondary condition, which is indicative of a maximum position of the steering in the clockwise direction, and
- a second secondary condition, which is indicative of a maximum position of the steering in the counterclockwise direction.

## Revendications

1. Procédé de planification de trajectoire permettant la détermination d'un profil de commande destiné à un véhicule automobile, en particulier un véhicule automobile circulant de manière autonome, le procédé consistant à :
- fournir un premier ensemble de positions (10), le premier ensemble de positions (10) comprenant au moins une information concernant une condition de début d'une trajectoire (200) au niveau d'un début de trajectoire (200),
- fournir un deuxième ensemble de positions (20), le deuxième ensemble de positions (20) comprenant au moins une information concernant une condition de fin de trajectoire (200) au niveau d'une fin de trajectoire (200),
- fournir un premier ensemble de commande (30), le premier ensemble de commande (30) comprenant au moins une information concernant un premier état de commande du véhicule automobile (100) au début de la trajectoire,
- fournir un deuxième ensemble de commande (40), le deuxième ensemble de commande (40) comprenant au moins une information concernant un deuxième état de commande du véhicule automobile à la fin de la trajectoire,
- fournir une fonction de modélisation de déplacement de véhicule (50), la fonction de modélisation de déplacement de véhicule comprenant un modèle de déplacement cinématique du véhicule automobile (100),
- fournir un résolveur (60),
- déterminer un ensemble d'informations de profil de commande (70) par application du résolveur (60) à la fonction de modélisation de déplacement de véhicule (50) en fonction du premier ensemble de positions (10), du deuxième ensemble de positions (20), du premier ensemble de commande (30) et du deuxième ensemble de commande (40), dans lequel l'ensemble d'information de profil de commande (70) comprend deux valeurs d'informations de profil (71, 72), dans lequel les valeurs d'information de profil (71, 72) sont indicatives de la trajectoire (200), et
- déterminer un profil de commande (110) pour le véhicule automobile (100) en fonction de l'ensemble d'informations de profil de commande (70), dans lequel le profil de commande (110) est indicatif de la trajectoire (200).

2. Procédé selon la revendication 1, dans lequel
le premier ensemble de positions (20) comprend deux premières coordonnées spatiales (21, 22) et une première information de direction (23),
dans lequel les premières coordonnées spatiales (21, 22) sont indicatives d'une position spatiale de la trajectoire (200) au début de la trajectoire, et
dans lequel la première information de direction (23) est indicative d'une tangente à la trajectoire (200) au début de la trajectoire ; et dans lequel
le deuxième ensemble de positions (30) comprend deux deuxièmes coordonnées spatiales (31, 32) et une deuxième information de direction (33),
dans lequel les deuxièmes coordonnées spatiales (31, 32) sont indicatives d'une position spatiale de la trajectoire (200) à la fin de la trajectoire, et
dans lequel la deuxième information de direction (33) est indicative d'une tangente à la trajectoire (200) à la fin de la trajectoire.

3. Procédé selon la revendication 1 ou 2, dans lequel
le premier ensemble de commande (40) comprend une première information de commande indiquant une position d'une direction du véhicule automobile (100) au début de la trajectoire ; et dans lequel
le deuxième ensemble de commande (50) comprend une deuxième information de commande qui est indicative de la position de la direction du véhicule automobile (100) à la fin de la trajectoire.

4. Procédé selon l'une des revendications précédentes, le procédé consistant en outre à :
- diviser la trajectoire (200) en une première zone et une deuxième zone, dans lequel
la première zone est indicative d'une phase de rapprochement du véhicule automobile (100) de la fin de la trajectoire, et dans lequel
la deuxième zone est indicative d'une phase de correction du véhicule automobile (100) avant d'atteindre la fin de la trajectoire.

5. Procédé selon la revendication 4, dans lequel
la première valeur d'information de profil (71) se situe dans la phase de rapprochement, et dans lequel la deuxième valeur d'information de profil (72) se situe dans la phase de correction.

6. Procédé selon l'une des revendications précédentes, dans lequel
la première valeur d'information de profil (71) de l'ensemble d'informations de profil de commande (70) est indicative d'un premier point ayant une tangente horizontale au profil de commande (110), et dans lequel la deuxième valeur d'information de profil (72) de l'ensemble d'informations de profil de commande (70) est indicative d'un deuxième point ayant une tangente horizontale au profil de commande (110).

7. Procédé selon l'une des revendications précédentes, dans lequel
l'ensemble d'informations de profil de commande (70) comprend une troisième valeur d'information de profil (73), et dans lequel
la troisième valeur d'information de profil (73) est indicative d'une étendue (T) de la trajectoire (200).

8. Procédé selon l'une des revendications précédentes, dans lequel
le premier ensemble de commande (40) comprend une troisième information de commande indiquant une vitesse du véhicule automobile (100) au début de la trajectoire ; et dans lequel
le deuxième ensemble de commande (50) comprend une quatrième information de commande indiquant une vitesse du véhicule automobile (100) à la fin de la trajectoire.

9. Procédé selon l'une des revendications précédentes, dans lequel
le premier ensemble de commande (40) comprend une cinquième information de commande indicative d'un taux de braquage du véhicule automobile (100) au début de la trajectoire ; et dans lequel
le deuxième ensemble de commande (50) comprend une sixième information de commande indicative d'un taux de braquage du véhicule automobile (100) à la fin de la trajectoire.

10. Procédé selon l'une des revendications précédentes, le procédé consistant en outre à :
- déterminer une fonction de commande (120) du véhicule automobile (100) en fonction du profil de commandes (110), dans lequel la fonction de commande (120) est indicative d'une commande de consigne du véhicule automobile (100) en fonction du temps.

11. Procédé selon la revendication 10, dans lequel la fonction de commande (120) comprend :
- une fonction de direction (121) du véhicule automobile (100) en fonction du profil de commande (110), dans lequel la fonction de direction (121) est indicative d'une direction de consigne du véhicule automobile (100) en fonction du temps, et
- une fonction de vitesse (122) du véhicule automobile (100) en fonction du profil de commande (110), dans lequel la fonction de vitesse (122) est indicative d'une vitesse de consigne du véhicule automobile (100) en fonction du temps.

12. Procédé selon l'une des revendications précédentes, le procédé consistant en outre à :
- fournir un ensemble de contraintes (80), l'ensemble de contraintes (80) comprenant au moins une information concernant une contrainte d'une commande du véhicule automobile (100), et
- dans lequel la détermination de l'ensemble d'informations de profil de commande (70) est en outre effectuée en fonction de l'ensemble de contraintes (80).

13. Procédé selon la revendication 12, dans lequel
l'ensemble de contraintes (80) est indicatif de la limite d'un système de direction de véhicule automobile, et l'ensemble de contraintes (80) comprend :
- une première contrainte indicative d'une position maximale de la direction dans le sens des aiguilles d'une montre, et
- une deuxième contrainte indicative d'une position maximale de la direction dans le sens inverse des aiguilles d'une montre.
